# EUROPEAN PATENT SPECIFICATION

(11) **EP 3 348 476 B1**
(45) Date of publication and mention of the grant of the patent: **03.04.2019**
(21) Application number: 17189253.2
(22) Date of filing: 04.09.2017
(51) Int. Cl.: B64C 39/00

(54) **ELLIPSOIDAL AIRCRAFT**
ELLIPSOIDES LUFTFAHRZEUG
AÉRONEF ELLIPSOÏDAL

(30) Priority: 16.01.2017 CN 201720047584 U
(43) Date of publication of application: 18.07.2018
(73) Proprietor: Cai, Bo, Shantou City Guangdong (CN)
(72) Inventor: Cai, Bo, Shantou City Guangdong (CN)
(74) Representative: Cabinet Chaillot

(56) References cited:
- WO-A1-2016/192524
- CN-A- 103 979 107
- DE-A1-102005 046 155

## Description

### FIELD OF THE INVENTION

The invention belongs to the field of aircraft equipment and relates to an ellipsoidal aircraft.

### BACKGROUND OF THE INVENTION

In the prior art, unmanned aerial vehicles (UAVs) can be divided into military and commercial UAVs according to application fields. In the military aspect, UAVs are divided into scoutplanes and target drones. In the commercial aspect, the application of UAVs to industries is the real rigid demand of UAVs; and the current application of UAVs to fields such as aerial photography, agriculture, plant protection, self-timer shooting, express delivery, disaster rescue, wildlife observation, infectious disease monitoring, mapping, news reporting, power patrol inspection, disaster relief, film and television shooting and romance making greatly expands the use of UAVs per se, and the expansion of industry application and the development of UAV technologies are also actively carried out in developed countries, but for children, UAVs have the problems of being easily damaged and inconvenient to operate, so there is a need for new equipment to solve the above problems.

DE 10 2005 046 155 A1 discloses an ellipsoidal aircraft and CN 103979107 A a UAV with folding rotor arms.

### SUMMARY OF THE INVENTION

For the disadvantages of the prior art, an object of the invention is to provide an ellipsoidal aircraft so as to solve the problems mentioned in the above background section. The ellipsoidal aircraft of the invention is convenient to use and operate, and has high stability and high reliability.

To achieve the above object, the invention is realized by the following technical solution: an ellipsoidal aircraft comprises an upper cover, a whirling arm, a clamping buckle, blades, a motor, a pedestal, a clamping slot, a housing and a fixing sleeve, wherein the upper cover is mounted at an upper end of the housing, the pedestal is assembled at a lower end of the housing, the pedestal is of a disc-shaped structure, a central axis of the pedestal and a central axis of the housing are on the same straight line, the whirling arm is mounted at a junction between the upper cover and the housing by a rotating shaft, the fixing sleeve is assembled at a middle position of a lower side of the whirling arm, the fixing sleeve is of a cylindrical structure, the fixing sleeve is internally equipped with the motor, the motor is of a cylindrical structure in outer shape, a central axis of the motor and a central axis of the fixing sleeve are on the same straight line, the motor and the blades are assembled together, the clamping buckle is mounted at a tail end of the whirling arm, a groove is arranged on a spherical side face of the housing, the clamping slot is arranged at a lower end of the groove, and the clamping buckle is engaged with the clamping slot.

Further, four grooves having the same specification are distributed on the spherical side face of the housing, and the four grooves are disposed at an included angle of 90° to the central axis of the housing.

Further, the pedestal distributed at the lower end of the housing is made of a rubber material.

Further, four said whirling arms are arranged, and the four whirling arms are disposed at an included angle of 90° to the central axis of the housing.

Further, a switch button is fixed at the lower end of the housing.

The invention has the following beneficial effects: the invention provides an ellipsoidal aircraft, wherein the pedestal is added to stably control the takeoff and landing process of the ellipsoidal aircraft of the invention and increase the contact area between the housing and the ground to prevent rollover; in addition, the pedestal made of a rubber material can effectively absorb the kinetic energy during landing, thus preventing electronic components in the housing from being damaged due to hard contact; in addition, a foldable design in the invention facilitates protecting the motor and the blades, thus solving the problem that blades and a motor of conventional equipment are easily damaged; and the whirling arm is engaged with the clamping slot located in the groove of the housing by the clamping buckle, the design of which can effectively prevent the blades and the motor from being damaged due to loosening of the whirling arm during transmission, and solves the problem that conventional equipment is easily damaged. The ellipsoidal aircraft of the invention is convenient to use and operate, and has high stability and high reliability.

### BRIEF DESCRIPTION OF THE DRAWINGS

Other features, objects and advantages of the invention will become more apparent by reading the detailed description of non-limiting embodiments made with reference to the following accompanying drawings.
Fig. 1 is a schematic structural view of an ellipsoidal aircraft of the invention; and
Fig. 2 is a front schematic structural view of an ellipsoidal aircraft of the invention.
In the Figures: 1 - upper cover; 2 - whirling arm; 3 - clamping buckle; 4 - blade; 5 - motor; 6 - pedestal; 7 - clamping slot; 8 - housing; 9 - fixing sleeve.

### DETAILED DESCRIPTION OF THE INVENTION

In order that the technical means, inventive features, objects and efficacies of the invention are readily understood, the invention will be further described below in conjunction with particular embodiments.

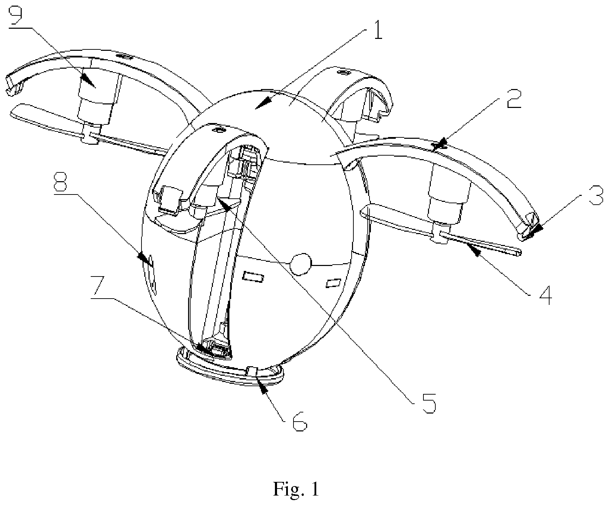

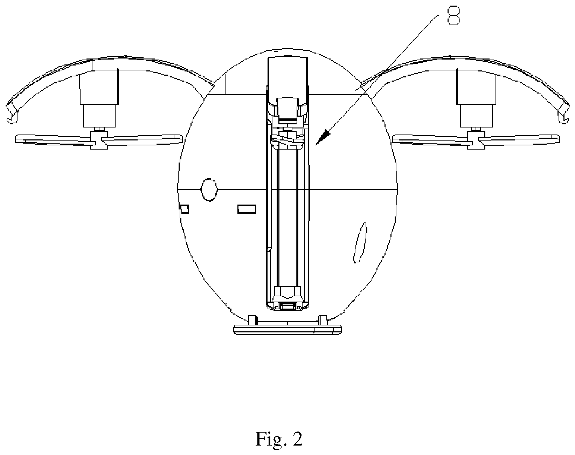

Referring to Figs. 1 and 2, the invention provides a technical solution: an ellipsoidal aircraft comprises an upper cover 1, a whirling arm 2, a clamping buckle 3, blades 4, a motor 5, a pedestal 6, a clamping slot 7, a housing 8 and a fixing sleeve 9, wherein the upper cover 1 is mounted at an upper end of the housing 8; the pedestal 6 is assembled at a lower end of the housing 8; the pedestal 6 is of a disc-shaped structure; a central axis of the pedestal 6 and a central axis of the housing 8 are on the same straight line; the pedestal 6 is added to stably control the takeoff and landing process of the ellipsoidal aircraft of the invention and increase the contact area between the housing and the ground to prevent rollover; in addition, the pedestal 6 made of a rubber material can effectively absorb the kinetic energy during landing, thus preventing electronic components in the housing 8 from being damaged due to hard contact; the whirling arm 2 is mounted at a junction between the upper cover 1 and the housing 8 by a rotating shaft; the fixing sleeve 9 is assembled at a middle position of a lower side of the whirling arm 2; the fixing sleeve 9 is of a cylindrical structure; the fixing sleeve 9 is internally equipped with the motor 5; the motor 5 is of a cylindrical structure in outer shape; a central axis of the motor 5 and a central axis of the fixing sleeve 9 are on the same straight line; the motor 5 and the blades 4 are assembled together; the clamping buckle 3 is mounted at a tail end of the whirling arm 2; a groove is arranged on a spherical side face of the housing 8; the clamping slot 7 is arranged at a lower end of the groove; and the clamping buckle 3 is engaged with the clamping slot 7.

Four grooves having the same specification are distributed on the spherical side face of the housing 8, and the four grooves are disposed at an included angle of 90° to the central axis of the housing 8. The pedestal 6 distributed at the lower end of the housing 8 is made of a rubber material. A foldable design in the invention facilitates protecting the motor 5 and the blades 4, thus solving the problem that blades 4 and a motor 5 of conventional equipment are easily damaged. Moreover, the whirling arm 2 is engaged with the clamping slot 7 located in the groove of the housing 8 by the clamping buckle 3, the design of which can effectively prevent the blades 4 and the motor 5 from being damaged due to loosening of the whirling arm 2 during transmission, and solves the problem that conventional equipment is easily damaged. Four whirling arms 2 are arranged, and the four whirling arms 2 are disposed at an included angle of 90° to the central axis of the housing 8. A switch button is fixed at the lower end of the housing 8.

The invention is specifically implemented as follows: when in use, an operator first checks whether the ellipsoidal aircraft of the invention has defects, if yes, the aircraft cannot be used and then a repairman is notified, if not, the aircraft can be used; before use, a user first places the ellipsoidal aircraft of the invention on the ground, then loosens the connection position of the clamping slot 7 and the clamping buckle 3, then rotates the whirling arm 2 and adjusts the position of the whirling arm 2 such that the central axis of the motor 5 and the horizontal plane are at an included angle of 90°; the aircraft can be used after fixing, and then remote control equipment can be used to control the rotation of the motor 5, thus controlling the takeoff and landing of the ellipsoidal aircraft of the invention; when the aircraft needs to land, the pedestal 6 contacts the ground, then the pedestal 6 made of a rubber material can effectively function to buffer, and the kinetic energy produced by rubber absorption further facilitates the stable landing of the ellipsoidal aircraft of the invention; and when the aircraft needs to be retracted, the user rotates the position of the blades 4 such that the blades 4 are disposed in parallel to the groove, and then the clamping buckle 3 on the whirling arm 2 is engaged with the clamping slot 7 in the groove, thus achieving the purpose of protection.

The basic principles, main features and advantages of the invention have been illustrated and described above, but for those skilled in the art, the invention is apparently not limited to the details of the above exemplary embodiments, and the invention can be implemented in other specific forms without departing from the scope of the invention. Accordingly, anyway, the embodiments should be considered to be exemplary and non-limiting. The scope of the invention is defined by the appended claims rather than the above description, thus all changes falling within the meaning and scope of the claims are intended to be included in the invention. Any reference numeral in the claims should not be regarded as limiting the claims involved.

In addition, it should be understood that the present description is described in accordance with embodiments, but not every embodiment only contains one independent technical solution, and such narrative manner of the present description is only for the sake of clarity, thus those skilled in the art should regard the present description as a whole, and the technical solutions in various embodiments may also be appropriately combined to form other embodiments that may be understood by those skilled in the art.

## Claims

1. An ellipsoidal aircraft, comprising an upper cover (1), a whirling arm (2), a clamping buckle (3), blades (4), a motor (5), a pedestal (6), a clamping slot (7), a housing (8) and a fixing sleeve (9), wherein the upper cover (1) is mounted at an upper end of the housing (8), the pedestal (6) is assembled at a lower end of the housing (8), the pedestal (6) is of a disc-shaped structure, a central axis of the pedestal (6) and a central axis of the housing (8) are on the same straight line, the whirling arm (2) is mounted at a junction between the upper cover (1) and the housing (8) by a rotating shaft, the fixing sleeve (9) is assembled at a middle position of a lower side of the whirling arm (2), the fixing sleeve (9) is of a cylindrical structure, the fixing sleeve (9) is internally equipped with the motor (5), the motor (5) is of a cylindrical structure in outer shape, a central axis of the motor (5) and a central axis of the fixing sleeve (9) are on the same straight line, the motor (5) and the blades (4) are assembled together, the clamping buckle (3) is mounted at a tail end of the whirling arm (2), a groove is arranged on a spherical side face of the housing (8), the clamping slot (7) is arranged at a lower end of the groove, and the clamping buckle (3) is configured to engage with the clamping slot (7).

2. The ellipsoidal aircraft according to claim 1, wherein four grooves having the same specification are distributed on the spherical side face of the housing (8), and the four grooves are disposed at an included angle of 90° to the central axis of the housing.

3. The ellipsoidal aircraft according to claim 1, wherein the pedestal (6) distributed at the lower end of the housing (8) is made of a rubber material.

4. The ellipsoidal aircraft according to claim 2, wherein four said whirling arms (2) are arranged, and the four whirling arms (2) are disposed at an included angle of 90° to the central axis of the housing (8).

5. The ellipsoidal aircraft according to claim 1, wherein a switch button is fixed at the lower end of the housing (8).

## Patentansprüche

1. Ellipsenförmiges Fluggerät, eine obere Abdeckung (1), einen Wirbelarm (2), eine Klemmschnalle (3), Flügel (4), einen Motor (5), einen Sockel (6), einen Klemmschlitz (7), ein Gehäuse (8) und eine Befestigungshülse (9) umfassend, wobei: die obere Abdeckung (1) an ein oberes Ende des Gehäuses (8) montiert ist, der Sockel (6) an ein unteres Ende des Gehäuses (8) angefügt ist, der Sockel (6) eine scheibenförmige Struktur aufweist, eine Mittelachse des Sockels (6) und eine Mittelachse des Gehäuses (8) auf der gleichen geraden Linie liegen, der Wirbelarm (2) durch eine Drehwelle an eine Zusammenführung von oberer Abdeckung (1) und Gehäuse (8) montiert ist, die Befestigungshülse (9) an eine Mittelposition einer unteren Seite des Wirbelarms (2) angefügt ist, die Befestigungshülse (9) eine zylinderförmige Struktur aufweist, die Befestigungshülse (9) innerlich mit dem Motor (5) ausgestattet ist, die Außenform des Motors (5) eine zylinderförmige Struktur aufweist, eine Mittelachse des Motors (5) und eine Mittelachse der Befestigungshülse (9) auf der gleichen geraden Linie liegen, der Motor (5) und die Flügel (4) zusammengefügt sind, die Klemmschnalle (3) in ein Ausläuferende des Wirbelarms (2) montiert ist, auf einer Kugelseitenfläche des Gehäuses (8) eine Rille angeordnet ist, der Klemmschlitz (7) an einem unteren Ende der Rille angeordnet ist und die Klemmschnalle (3) dafür gestaltet ist, mit dem Klemmschlitz (7) in Eingriff zu stehen.

2. Ellipsenförmiges Fluggerät nach Anspruch 1, wobei auf der Kugelseitenfläche des Gehäuses (8) vier Rillen mit der gleichen Ausprägung verteilt sind und die vier Rillen in einem eingeschlossenen Winkel von 90° zur Mittelachse des Gehäuses angeordnet sind.

3. Ellipsenförmiges Fluggerät nach Anspruch 1, wobei der Sockel (6), der am unteren Ende des Gehäuses (8) verteilt ist, aus einem Kautschukmaterial besteht.

4. Ellipsenförmiges Fluggerät nach Anspruch 2, wobei vier der Wirbelarme (2) angeordnet sind und die vier Wirbelarme (2) in einem eingeschlossenen Winkel von 90° zur Mittelachse des Gehäuses (8) angeordnet sind.

5. Ellipsenförmiges Fluggerät nach Anspruch 1, wobei am unteren Ende des Gehäuses (8) ein Schaltknopf befestigt ist.

## Revendications

1. Aéronef ellipsoïdal, comprenant un capot supérieur (1), un bras de tourbillonnement (2), une boucle de serrage (3), des pales (4), un moteur (5), un socle (6), une fente de serrage (7), un boîtier (8) et un manchon de fixation (9), le capot supérieur (1) étant monté à une extrémité supérieure du boîtier (8), le socle (6) étant assemblé au niveau d'extrémité inférieure du boîtier (8), le socle (6) étant une structure en forme de disque, un axe central du socle (6) et un axe central du boîtier (8) étant sur la même ligne droite, le bras de tourbillonnement (2) étant monté à une jonction entre le capot supérieur (1) et le boîtier (8) par un arbre rotatif, le manchon de fixation (9) étant assemblé au niveau d'une position médiane d'un côté inférieur du bras de tourbillonnement (2), le manchon de fixation (9) étant une structure cylindrique, le manchon de fixation (9) étant équipé intérieurement du moteur (5), le moteur (5) étant une structure cylindrique en forme externe, un axe central du moteur (5) et un axe central du manchon de fixation (9) étant sur la même ligne droite, le moteur (5) et les pales (4) étant assemblés ensemble, la boucle de serrage (3) étant montée à une extrémité arrière du bras de tourbillonnement (2), une rainure étant agencée sur une face latérale sphérique du boîtier (8), la fente de serrage (7) étant agencée à une extrémité inférieure de la rainure, et la boucle de serrage (3) étant configurée pour être engagée avec la fente de serrage (7).

2. Aéronef ellipsoïdal selon la revendication 1, dans lequel quatre rainures ayant la même spécification sont réparties sur la face latérale sphérique du boîtier (8), et les quatre rainures sont disposées selon un angle inclus de 90° par rapport à l'axe central du boîtier.

3. Aéronef ellipsoïdal selon la revendication 1, dans lequel le socle (6) placé à l'extrémité inférieure du boîtier (8) est fait d'un matériau en caoutchouc.

4. Aéronef ellipsoïdal selon la revendication 2, dans lequel quatre bras de tourbillonnement précités (4) sont agencés, et les quatre bras de tourbillonnement (2) sont disposés selon un angle inclus de 90° par rapport à l'axe central du boîtier (8).

5. Aéronef ellipsoïdal selon la revendication 1, dans lequel un bouton de commutation est fixé au niveau de l'extrémité inférieure du boîtier (8).
